# EUROPÄISCHE PATENTSCHRIFT

(11) **EP 0 531 730 B1**
(45) Veröffentlichungstag und Bekanntmachung des Hinweises auf die Patenterteilung: **24.05.1995**
(21) Anmeldenummer: 92113646.1
(22) Anmeldetag: 11.08.1992
(51) Int. Cl.: B60J 1/20

(54) **Sonnenschutzblende**
Sun shade blind
Store de protection contre le soleil

(30) Priorität: 09.09.1991 DE 4129689
(43) Veröffentlichungstag der Anmeldung: 17.03.1993
(73) Patentinhaber: Gebr. Happich GmbH, D-42097 Wuppertal (DE)
(72) Erfinder: Mahler, Gert, W-5608 Radevormwald (DE)

(56) Entgegenhaltungen:
- DE-A- 3 415 930
- DE-A- 3 532 013
- FR-A- 2 387 812
- US-A- 4 825 921

## Beschreibung

Die Erfindung bezieht sich auf eine Sonnenschutzblende für Scheiben von Kraftfahrzeugen mit einem Führungselement aus einer Griffleiste und einer Führungsschiene, einer fahrzeugfest gelagerten, drehbaren Wickelwelle und einem um die Wickelwelle gewickelten, mit einer Kante mit der Griffleiste verbundenen Sonnenschutzvorhang.

Eine Sonnenschutzblende der gattungsgemäßen Art ist durch die FR-A-2 387 812 bekanntgeworden. Nachteilig ist bei dieser bekannten ausziehbaren Sonnenschutzblende, daß die Parallelführung schwierig zu bewerkstelligen ist, so daß, sich die bekannte ausziehbare Sonnenschutzblende leicht verkanten kann.

Der Erfindung liegt ausgehend von einer Sonnenschutzblende der eingangs genannten Art die Aufgabe zugrunde, diese so zu gestalten, daß sie eine einwandfreie Parallelführung aufweist und im eingeschobenen Zustand des Sonnenschutzvorhangs Raum für vertieft angeordnete Ausstattungselemente bietet.

Zur Lösung dieser Aufgabe ist erfindungsgemäß vorgesehen, daß das Führungselement wenigstens zwei Führungsschienen aufweist, auf jeder Führungsschiene eine zahnstangenähnliche Verzahnung angeordnet ist, auf der Wickelwelle wenigstens zwei Zahnräder angeordnet sind, die mit der Verzahnung der wenigstens zwei Führungsschienen kämmen und der Sonnenschutzvorhang im ausgezogenen Zustand den Zwischenraum zwischen den Führungsschienen abdeckt.

Bei der erfindungsgemäßen ausziehbaren Sonnenschutzblende wird eine verkantungsfreie Führung der Griffleiste durch die Führungsschienen und die Wickelwelle gewährleistet. Die auf der Wickelwelle drehfest angeordneten Zahnräder sorgen dafür, daß die sich beabstandeten Führungsschienen stets um denselben Betrag bewegen, wenn die Griffleiste bewegt wird, unabhängig davon, ob die Griffleiste mittig oder seitlich versetzt angefaßt wird. Das Führungselement aus der Griffleiste mit den seitlichen Führungsschienen hat etwa C-Form, wobei der Zwischenraum zwischen den Führungsschienen nur im ausgezogenen Zustand vom Sonnenschutzvorhang abgedeckt ist, beim Einschieben jedoch frei bleibt, so daß sich im Zwischenraum zwischen den Führungsschienen und der Griffleiste Ausstattungselemente wie Lüfterdüsen, Griffmulden für Haltegriffe oder Innenraumbeleuchtungen anordnen lassen, die in den Zwischenraum hineinragen, ohne die Bewegung der Sonnenschutzblende zu behindern.

Um jeden Lichtdurchfall im ausgezogenen Zustand zu vermeiden und um den Sonnenschutzvorhang an die vorzugsweise gebogene Form der Führungsschiene anzupassen, können die Seitenkanten des Sonnenschutzvorhangs vorteilhafterweise auf den Führungsschienen aufliegen, d. h. die Breite des Sonnenschutzvorhangs ist etwas größer als der Zwischenraum zwischen den Führungsschienen.

Vorzugsweise kann die Sonnenschutzblende zwischen einem Kraftfahrzeugbereich in der Nähe der jeweiligen Scheibe und einer fahrzeugfesten Verkleidung herausbewegbar angeordnet sein, so daß sie im eingeschobenen Zustand unsichtbar hinter der Verkleidung liegt.

Die Wickelwelle kann vorteilhafterweise von zwei fahrzeugfesten Lagerböckchen getragen werden, die bevorzugterweise an der dem Fahrzeugdach zugewandten Seite der Verkleidung befestigt sein können, so daß sich die erfindungsgemäße Sonnenschutzblende an der Verkleidung vormontieren und mit der Verkleidung am Fahrzeugdach befestigen läßt.

Da die Sonnenschutzblende der Wölbung des Fahrzeugdachs angepaßt sein soll und somit zum Fahrzeugdach hin konvex geformt ist, ist es vorteilhaft, wenn die Wickelwelle auf der der Verkleidung abgewandten Seite des Führungselements angeordnet ist, da sich der Sonnenschutzvorhang beim Ausziehen auf diese Weise auf die Führungsschienen auflegt und der Wölbung des Führungselements folgt. Dabei wird der Sonnenschutzvorhang beim Ausziehen immer mehr gestrafft, da sich der Durchmesser des auf die Wickelwelle aufgewickelten Sonnenschutzvorhangs beim Ausziehen vermindert und somit bei gleichem Ausziehweg immer etwas weniger Länge des Sonnenschutzvorhangs von der Wickelwelle abgewickelt wird.

Der Sonnenschutzvorhang kann aus einem lichtundurchlässigen Gewebe oder einer Folie bestehen, kann aber auch, insbesondere für die Seiten- und Heckscheiben, aus einem halbdurchlässigen Gewebe mit entsprechendem Fadenabstand oder aus einer perforierten Folie bestehen. Der Sonnenschutzvorhang kann an seiner Außenseite lichtreflektierend gestaltet sein, um das Aufheizen des Fahrzeuginnenraums durch Sonneneinstrahlung zu vermindern.

Zwischen der Verkleidung und den Führungsschienen können federnde Andruckelemente angeordnet sein, die vorzugsweise materialeinheitlich mit den Lagerböckchen geformt sein können.

Dadurch, daß die Wickelwelle über die Zahnräder in direktem Eingriff mit der zahnstangenähnlichen Verzahnung an den Führungsschienen steht, läßt sich die Wickelwelle dazu benutzen, das Ausziehen und/oder das Einschieben der Sonnenschutzblende vollautomatisch durch einen Elektromotor oder halbautomatisch durch eine mit der Wickelwelle zusammenwirkende Wickelfeder durchzuführen. Der Elektromotor kann als Getriebemotor direkt an der Wickelwelle angreifen oder in die zahnstangenähnliche Verzahnung an den Führungsschienen eingreifen, wobei in diesem Fall die Wickelwelle dazu dient, die verkantungsfreie Führung der Sonnenschutzblende zu gewährleisten.

Ist eine mit der Wickelwelle zusammenwirkende Wickelfeder vorgesehen, dient sie dazu, den Sonnenschutzvorhang auf die Wickelwelle aufzuwickeln und dabei das Führungselement aus der Griffleiste und den beiden Führungsschienen zurückzuziehen.

Damit die Sonnenschutzblende in diesem Fall in der ausgezogenen Stellung verbleibt, kann ein mit dem Führungselement zusammenwirkendes Rastelement vorgesehen sein, das sich direkt von Hand oder indirekt über einen druckknopfbetätigten Elektromagnet ausrasten läßt.

Um ein zu schnelles und geräuschvolles Zurückschnellen der Sonnenschutzblende zu vermeiden, kann eine mit der Wickelwelle oder dem Führungselement zusammenwirkende Bremse vorgesehen sein, die vorzugsweise nur in Einziehrichtung wirkt aus einer in einem mit einer zähen Flüssigkeit gefüllten Gehäuse angeordneten Scheibe, die mit der Wickelwelle oder der zahnstangenähnlichen Verzahnung in Antriebsverbindung steht, bestehen kann.

Die Erfindung wird nachstehend anhand eines in der Zeichnung dargestellten Ausführungsbeispiels des näheren erläutert. In der Zeichnung zeigen:
- Fig. 1: eine perspektivische, aufgeschnittene Darstellung der Sonnenschutzblende im eingeschobenen Zustand,

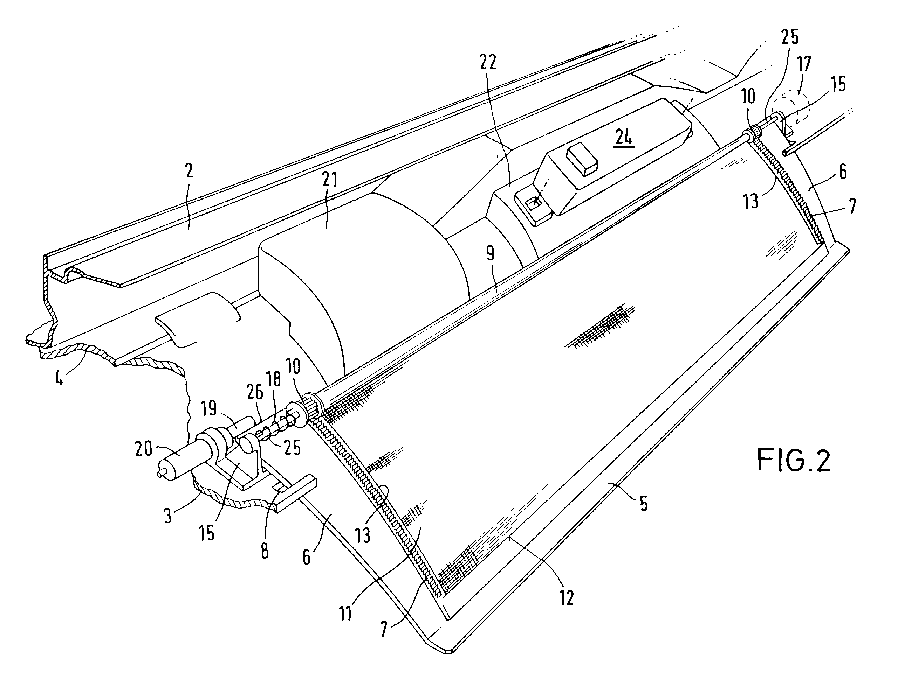

- Fig. 2: eine perspektivische, teilweise aufgeschnittene Darstellung der Sonnenschutzblende im ausgezogenen Zustand,
- Fig. 3: einen Schnitt entlang der Linie III - III in Fig. 1 und
- Fig. 4: einen Schnitt entlang der Linie IV - IV in Fig. 1.

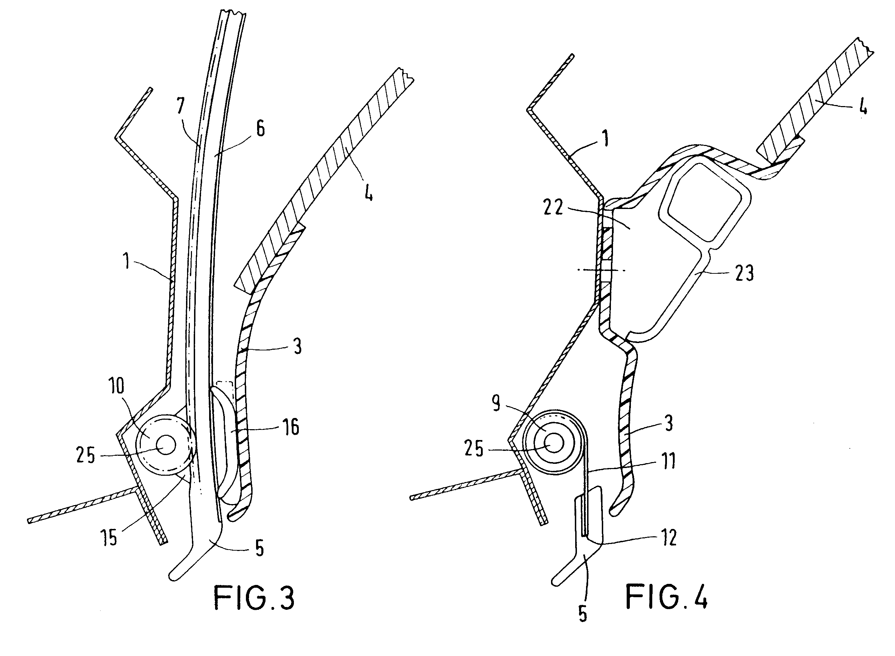

Das dargestellte Ausführungsbeispiel bezieht sich auf eine Sonnenschutzblende für die Seitenscheiben eines Kraftfahrzeuges, läßt sich in analoger Weise jedoch auch auf die Windschutzscheibe und/oder die Heckscheibe übertragen. Von einem Kraftfahrzeugdach ist in den Fig. 3 und 4 schematisch ein oberer Längsträger 1 dargestellt, an dem in nicht dargestellter Weise ein Dachblech befestigt ist. Im Dach ist ein Schiebedachrahmen 2 angeordnet, um anzudeuten, in welchem Bereich sich die erfindungsgemäße Sonnenschutzblende zwischen der Oberkante einer Seitentür und dem Schiebedachrahmen 2 bewegen kann. Entlang der Längsträger, der Querträger oberhalb der Windschutzscheibe und der Heckscheibe und den sogenannten A-Säulen zwischen der Windschutzscheibe und den Vordertüren, den B-Säulen zwischen den Vordertüren und den Hintertüren und den C-Säulen zwischen den Hintertüren und der Heckscheibe ist eine Verkleidung 3 in Form eines umlaufenden tragenden Kunststoffrahmens angeordnet, die als Halterung für Ausstattungselemente wie Lüfterdüsen 21, Griffmulden 22 für Haltegriffe 23 oder Innenraumbeleuchtungen 24 sowie für einen Dachhimmel 4 dient.

Die erfindungsgemäße Sonnenschutzblende besteht aus einem Führungselement in Form einer Griffleiste 5 mit seitlichen, gebogenen Führungsschienen 6, auf deren, der Verkleidung 3 abgewandten Seite parallele, zahnstangenähnliche Verzahnungen 7 angeordnet sind.

Die Griffleiste 5 mit den Führungsschienen 6 ist in einem Schlitz 8 in der Verkleidung 3 geführt, wobei die Griffleiste 5 in der eingeschobenen Stellung nur so weit aus dem Schlitz 8 herausragt, daß sie sich von Hand ergreifen läßt. In der Nähe des Schlitzes 8 ist eine Wickelwelle 9 für einen Sonnenschutzvorhang 11 angeordnet. Die Wickelwelle 9 ist drehbar mittels Achsstummeln 25 in Lagerböckchen 15 gelagert. Die Lagerböckchen 15 sind an der dem Fahrzeugdach zugewandten Seite der Verkleidung 3 befestigt, so daß sich die Sonnenschutzblende an der Verkleidung 3 montieren und anschließend am oberen Längsträger befestigen läßt. An jedem Ende der Wickelwelle 9 sind drehfest Zahnräder 10 angeordnet, die mit der zahnstangenähnlichen Verzahnung 7 auf den Führungsschienen 6 in Eingriff stehen. Auf diese Weise werden die Führungsschienen 6 zwangsweise synchron bewegt, wenn die Sonnenschutzblende an der Griffleiste 5 ausgezogen wird, so daß kein Verkanten möglich ist.

Der Sonnenschutzvorhang 11 ist mit seiner freien Kante 12 an der Griffleiste 5 befestigt, während die Seitenkanten 13 auf einem Randbereich der gebogenen Führungsschienen 6 aufliegen und sich der konvexen Form der Führungsschienen 6 anpassen Auf diese Weise läßt sich vermeiden, daß sich zwischen dem Sonnenschutzvorhang 11 und den Führungsschienen 6 ein unerwünschter Lichtspalt bildet. Der Sonnenschutzvorhang 11 liegt mit seinen Seitenkanten 13 stets straff auf den Führungsschienen 6 auf, da sich der Durchmesser des auf die Wickelwelle 9 aufgewickelten Sonnenschutzvorhangs 11 beim Abwickeln vermindert und somit gegen Ende der Ausziehbewegung weniger Länge des Sonnenschutzvorhangs 11 von der Wickelwelle 9 abgewickelt wird als der Ausziehbewegung der Griffleiste 5 mit den Führungsschienen 6 entspricht.

Eine klapperfreie Führung der Sonnenschutzblende läßt sich durch federnde Andruckelemente 16 erreichen, die mit den Lagerböckchen 15 materialeinheitlich geformt sein können.

Mit einem Achsstummel 25 kann ein Elektromotor 17 oder eine Bremse in Form einer in einem mit einer zähen Flüssigkeit gefüllten Gehäuse angeordneten Scheibe gekuppelt sein. Mittels des als Getriebmotor ausgebildeten Elektromotors 17 läßt sich die erfindungsgemäße Sonnenschutzblende auf Knopfdruck ein- und ausfahren, während eine Wickelfeder 18 vorgesehen sein kann, wenn anstatt eines Elektromotors 17 eine Bremse mit dem Achsstummel 25 gekuppelt ist. In diesem Fall läßt sich die Sonnenschutzblende von Hand an der Griffleiste 5 herausziehen, bis ein Raststift 19 hinter eine Rastkante 26 an einer Führungsschiene 6 eingreift. Durch das Abrollen des Sonnenschutzvorhangs 11 von der Wickelwelle 9 wird dabei die Wickelfeder 18 gespannt, so daß die Sonnenschutzblende beim Lösen des Raststifts 19, z. B. mittels eines Hubmagneten 20, in die Ursprungsstellung zurückgezogenen wird, da der Sonnenschutzvorhang 11 durch die Wickelfeder 18, die die Wickelwelle 9 in Drehung versetzt, auf die Wickelwelle 9 aufgewickelt wird und die Griffleiste 5 mit den Führungsschienen 6 mit sich zieht.

Um ein unangenehmes, mit Geräuschen verbundenes Zurückschnellen der Sonnenschutzblende zu vermeiden, wird die Drehung der Wickelwelle 9 durch die bereits erwähnte Bremse auf eine annehmbare Geschwindigkeit abgebremst.

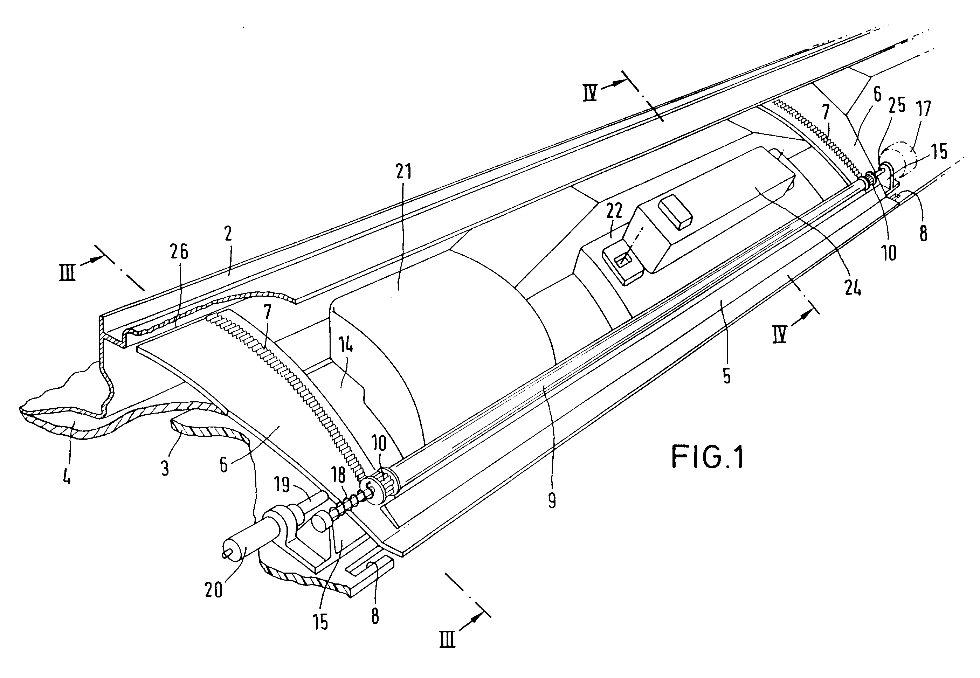

Aus Fig. 1 und 4 ist ersichtlich, daß der Zwischenraum 14 zwischen den Führungsschienen 6 in der eingeschobenen Stellung völlig frei bleibt, da sich das Wickelrohr 9 mit dem aufgewickelten Sonnenschutzvorhang 11 im Bereich der Griffleiste 5 befindet. Dieser Zwischenraum 14 läßt sich daher ausnutzen, um dort Ausstattungselemente wie eine Lüfterdüse 21, eine Griffmulde 22 für einen Haltegriff 23 oder eine Innenraumbeleuchtung 24 anzuordnen.

Der Sonnenschutzvorhang 11 kann aus einer undurchsichtigen oder halbdurchsichtigen Folie oder aus einem Gewebe bestehen. Die Folie kann perforiert sein, während das Gewebe mit einem solchen Fadenabstand gewebt sein kann, daß es halbdurchlässig erscheint. Die Folie oder das Gewebe können zur Außenseite lichtreflektierend beschichtet sein, um einfallende Sonnenstrahlen zu reflektieren und dadurch ein Aufheizen des Fahrzeuginnenraums zu vermindern.

Die Führungsschienen 6 mit der zahnstangenähnlichen Verzahnung 7 können schräg verlaufen, um eine schräge Ausziehbewegung der Sonnenschutzblende zu erreichen, was vorteilhaft ist, um die Scheibenbereiche in der Nähe der schräg verlaufenden A-Säulen abdecken zu können. Gleichzeitig kann die Wickelwelle 9 mit dem Sonnenschutzvorhang 11 axial verschiebbar, wie in der deutschen Offenlegungsschrift DE-A-38 13 153 derselben Anmelderin beschrieben, angeordnet sein, um die entsprechende Bewegung der Wickelwelle 9 mit dem Sonnenschutzvorhang 11 zu erreichen.

## Patentansprüche

1. Sonnenschutzblende für Scheiben von Kraftfahrzeugen mit:
- einem Führungselement aus einer Griffleiste (5) und einer Führungsschiene (6),
- einer fahrzeugfest gelagerten, drehbaren Wickelwelle (9) und
- einem um die Wickelwelle (9) gewickelten, mit einer Kante (12) mit der Griffleiste (5) verbundenen Sonnenschutzvorhang (11),
dadurch gekennzeichnet, daß
- das Führungselement wenigstens zwei Führungsschienen (6) aufweist,
- auf jeder Führungsschiene (6) eine zahnstangenähnliche Verzahnung (7) angeordnet ist,
- auf der Wickelwelle (9) wenigstens zwei Zahnräder (10) angeordnet sind, die mit der Verzahnung (7) der wenigstens zwei Führungsschienen (6) kämmen und
- der Sonnenschutzvorhang (11) im ausgezogenen Zustand den Zwischenraum (14) zwischen den Führungsschienen abdeckt.

2. Sonnenschutzblende nach Anspruch 1, **dadurch gekennzeichnet**, daß die Seitenkanten (13) des Sonnenschutzvorhangs (11) auf den Führungsschienen (6) aufliegen.

3. Sonnenschutzblende nach Anspruch 1 oder 2, **dadurch gekennzeichnet**, daß die Führungsschienen (6) gebogen sind.

4. Sonnenschutzblende nach einem oder mehreren der Ansprüche 1 bis 3, **dadurch gekennzeichnet**, daß sie zwischen einem Kraftfahrzeugdachbereich (1) in der Nähe der jeweiligen Scheibe und einer fahrzeugfesten Verkleidung (3) herausbewegbar angeordnet ist.

5. Sonnenschutzblende nach einem oder mehreren der Ansprüche 1 bis 4, **dadurch gekennzeichnet**, daß die Wickelwelle (9) von zwei fahrzeugfesten Lagerböckchen (15) getragen wird.

6. Sonnenschutzblende nach Anspruch 4 und 5, **dadurch gekennzeichnet**, daß die Lagerböckchen (15) an der dem Fahrzeugdach (1) zugewandten Seite der Verkleidung (3) befestigt sind.

7. Sonnenschutzblende nach Anspruch 6, **dadurch gekennzeichnet**, daß die Wickelwelle (9) auf der der Verkleidung (3) abgewandten Seite des Führungselements (5, 6) angeordnet ist.

8. Sonnenschutzblende nach Anspruch 7, **dadurch gekennzeichnet**, daß zwischen der Verkleidung (3) und den Führungsschienen (6) federnde Andruckelemente (16) angeordnet sind.

9. Sonnenschutzblende nach einem oder mehreren der Ansprüche 1 bis 8, **gekennzeichnet durch** einen in Antriebsverbindung mit dem Führungselement (5, 6) oder der Wickelwelle (9) gekuppelten Elektromotor (17).

10. Sonnenschutzblende nach einem oder mehreren der Ansprüche 1 bis 8, **gekennzeichnet durch** eine mit der Wickelwelle (9) zusammenwirkende Wickelfeder (18) und ein mit dem Führungselement (5, 6) zusammenwirkendes Rastelement (19).

11. Sonnenschutzblende nach Anspruch 10, **gekennzeichnet durch** eine mit der Wickelwelle (9) oder dem Führungselement (5, 6) zusammenwirkende Bremse (17).

12. Sonnenschutzblende nach Anspruch 10 oder 11, **gekennzeichnet durch** eine elektromagnetische Betätigung (20) des Rastelements (19).

13. Sonnenschutzblende nach einem oder mehreren der Ansprüche 1 bis 12, **gekennzeichnet durch** in den Bereich (14) zwischen den Führungsschienen (6) ragende, an der Verkleidung (3) befestigte Ausstattungselemente wie Lüfterdüsen (21), Griffmulden (22) für Haltegriffe (23) oder Innenraumbeleuchtungen (24).

## Claims

1. Sun blind for windows of motor vehicles, having:
- a guide element consisting of a grab moulding (5) and a guide rail (6),
- a rotatable winding shaft (9) mounted fixed to the vehicle, and
- a sun-protection curtain (11), which is wound around the winding shaft (9) and is connected by one edge (12) to the grab moulding (5),
characterized in that
- the guide element exhibits at least two guide rails (6),
- on each guide rail (6) there is disposed a toothing (7) similar to a gear rack,
- on the winding shaft (9) there are disposed at least two gearwheels (10), which mesh with the toothing (7) of the at least two guide rails (6), and
- the sun-protection curtain (11), in the extended state, covers the interspace (14) between the guide rails.

2. Sun blind according to Claim 1, characterized in that the lateral edges (13) of the sun-protection curtain (11) rest upon the guide rails (6).

3. Sun blind according to Claim 1 or 2, characterized in that the guide rails (6) are bent.

4. Sun blind according to one or more of Claims 1 to 3, characterized in that it is disposed, such that it can be moved out, between a motor-vehicle roof region (1) close to the respective window and a vehicle-fixed lining (3).

5. Sun blind according to one or more of Claims 1 to 4, characterized in that the winding shaft (9) is supported by two vehicle-fixed bearing brackets (15).

6. Sun blind according to Claim 4 and 5, characterized in that the bearing brackets (15) are fastened to that side of the lining (3) facing the vehicle roof (1).

7. Sun blind according to Claim 6, characterized in that the winding shaft (9) is disposed on that side of the guide element (5, 6) facing away from the lining (3).

8. Sun blind according to Claim 7, characterized in that between the lining (3) and the guide rails (6) there are disposed resilient pressing elements (16).

9. Sun blind according to one or more of Claims 1 to 8, characterized by an electric motor (17) coupled in drive-connection to the guide element (5, 6) or the winding shaft (9).

10. Sun blind according to one or more of Claims 1 to 8, characterized by a winding spring (18) interacting with the winding shaft (9) and a latching element (19) interacting with the guide element (5, 6).

11. Sun blind according to Claim 10, characterized by a brake (17) interacting with the winding shaft (9) or the guide element (5, 6).

12. Sun blind according to Claim 10 or 11, characterized by an electromagnetic actuation (20) of the latching element (19).

13. Sun blind according to one or more of Claims 1 to 12, characterized by fitting elements which jut into the region (14) between the guide rails (6) and are fastened to the lining (3), such as fan nozzles (21), grip recesses (22) for grab handles (23) or interior light fittings (24).

## Revendications

1. Store de protection contre le soleil, pour des vitres de véhicules automobiles, avec :
- un élément de guidage composé d'une bande de saisie (5) et d'une glissière de guidage (6),
- un arbre d'enroulement (9), tourillonnant en un point fixe du véhicule, est susceptible de tourner et
- un rideau de protection contre le soleil (11), enroulé autour de l'arbre d'enroulement (9), relié par un bord (12) à la bande de saisie (9),
caractérisé en ce que
- l'élément de guidage présente au moins deux glissières de guidage (6),
- une denture (7), analogue à une crémaillère, disposée sur chaque glissière de guidage (6),
- au moins deux roues dentées (10), s'engrenant avec la denture (7) des au moins deux glissières de guidage (6), étant disposées sur l'arbre d'enroulement (9), et
- le rideau de protection contre le soleil (11) recouvrant l'espace intermédiaire (14) existant entre les glissière de guidage lorsqu'il est à l'état tiré.

2. Store de protection contre le soleil selon la revendication 1, caractérisé en ce que les arêtes latérales (13) du rideau (11) reposent sur les glissières de guidage (6).

3. Store de protection contre le soleil selon la revendication 1 ou 2, caractérisé en ce que les glissières de guidage (6) sont arquées.

4. Store de protection contre le soleil selon l'une ou plusieurs des revendications 1 à 3, caractérisé en ce qu'il est disposé de façon à pouvoir être sorti entre une zone de toit de véhicules (1), à proximité de la vitre respective et un revêtement (3) fixe par rapport au véhicule.

5. Store de protection contre le soleil selon l'une ou plusieurs des revendications 1 à 4, caractérisé en ce que l'arbre d'enroulement (9) est porté par deux petits blocs de palier (15) fixés au véhicule.

6. Store de protection contre le soleil selon les revendications 4 et 5, caractérisé en ce que les petits blocs de palier (15) sont fixés sur la face de revêtement (3) tournée vers le toit de véhicule (1).

7. Store de protection contre le soleil selon la revendication 6, caractérisé en ce que l'arbre d'enroulement (9) est disposé sur la face de l'élément de guidage (5, 6) opposée au revêtement (3).

8. Store de protection contre le soleil selon la revendication 7, caractérisé en ce que des éléments de pressage (16) élastiques sont disposés entre le revêtement (3) et les glissières de guidage (6).

9. Store de protection contre le soleil selon l'une ou plusieurs des revendications 1 à 8, caractérisé par un moteur électrique (17) couplé en entraînement à l'élément de guidage (5, 6) ou à l'arbre d'enroulement (9).

10. Store de protection contre le soleil selon l'une ou plusieurs des revendications 1 à 8, caractérisé par un ressort d'enroulement (18) coopérant avec l'arbre d'enroulement (9) et un élément à encliquetage (19) coopérant avec l'élément de guidage (5, 6).

11. Store de protection contre le soleil selon la revendication 10, caractérisé par un frein (17) coopérant avec l'arbre d'enroulement (9) ou l'élément de guidade (5, 6).

12. Store de protection contre le soleil selon la revendication 10 ou 11, caractérisé par un actionnement électromagnétique (20) de l'élément d'encliquetage (19).

13. Store de protection contre le soleil selon l'une ou plusieurs des revendications 1 à 12, caractérisé par des éléments d'équipement, se projetant dans la zone (14) située entre les glissières de guidage (6) et fixés au revêtement (3), tels que des buses de ventilateur (21), des auges de saisie (22) pour des poignées de maintien (23) ou des éclairage d'habitacle (24).
